# EUROPEAN PATENT APPLICATION

(11) **EP 2 525 080 A1**
(43) Date of publication of application: **21.11.2012**
(21) Application number: 12003599.3
(22) Date of filing: 07.05.2012
(51) Int. Cl.: F03D 1/00

(54) **Machining tool**

(30) Priority: 19.05.2011 ES 201100558
(71) Applicant: Gamesa Innovation & Technology, S.L., 31621 Sarriguren (ES)
(72) Inventor: Alonso, Hernandez, Inmaculada, 48170 - Zamudio - Bizkaia (ES); Uriarte, Mijangos, Gorka, 48170 - Zamudio - Bizkaia (ES)

(57) **Abstract**

Machining tool to perform machining processes in the field, comprising a magnetic drill (19) with a vertical advance joined to a sliding table (12) with a longitudinal advance, all of which are mounted onto a bracket support (1) allowing the assembly to adapt to the existing space inside the wind turbine. The sliding table (12) is positioned and leveled by correctly combining bolts (15 and 16) which collaborate in their respective slots (5) and holes (6), consolidated with a series of support feet (8), securing a machining with the required precision and minimizing vibrations in the assembly.

## Description

### Object of the invention.

The present invention relates to a tool used for machining processes inside a wind turbine.

The tool is characterized by incorporating means of movement on its vertical axis and on its longitudinal axis. The tool likewise comprises support and anchoring elements to prevent vibrations and serve to level the equipment. The reduced dimensions of the tool facilitate handling inside the nacelle and its reasonable total weight enables a single operator to handle it manually.

### Background of the invention.

The wind turbine is a machine having various components that require regular maintenance. There are specialized personnel with the expertise necessary for performing this maintenance, yet the work often proves complicated due to the reduced space and need to employ highly specific tools.

Such is the case of German patent DE 102005061498, which presents a hydraulic tool for yaw shaft bearing maintenance, though more specifically for its ring enclosure. The hydraulic cylinder is combined with other constituent elements and an ultrasound transmitter.

This need for machinery especially adapted to the actual spaces inside a wind turbine has revealed that the ideal solution would be a tool with some specific characteristics combining freedom of movement, precision and operational simplicity for personnel assigned to perform maintenance tasks in the field.

### Description of the invention

An object of this invention is to conceive a tool capable of carrying out machining processes in the field. These operations require a machining tool having both vertical and transversal movement.

Another object of the invention is the incorporation of an extendable table equipped with the means to push it so as to achieve its movement. This is achieved with a table having a lower fixed part anchored to a support and a movable upper part on whose surface the machining element is secured. In addition to the foregoing, the coupling fastening the drill to the table is complemented with a support that prevents the drill from regressing.

Lastly, a further object of the invention is to provide the tool with a support so as to allow assembly staging, thus adapting to the existing space and achieving that the extendable table can be correctly positioned to carry out machining processes at the required precision. The support has height regulators, work plane regulators and a reaction arm to stabilize the assembly.

In addition to these main characteristics, the machining tool presents other secondary characteristics, namely:
- the symmetrical utilization of the tool allows a power supply connection from either the left or the right,
- the weight of each tool component does not exceed 20 kg; thus an operator could handle, set up and dismantle the assembly wherever the application is needed.

### Brief description of the drawings.

The following figures are included in order to explain how the machining tool and its most substantial parts are constituted:
Figure 1 a shows a perspective view of the inner part of the support while figure 1b is the same perspective, yet shown from the outside.
Figure 2 shows the support anchored and the table leveled on top of it.
Figure 3 is a perspective of the inner part of the support, illustrating the regulating bolts for adjusting the table.
Figure 4 shows a perspective of the assembly mounted and in motion from the effort of a lead screw acting on the extendable table.
Figure 5 represents the assembly with all its constituent elements mounted in an applicable work area.

### Description of the preferential embodiment

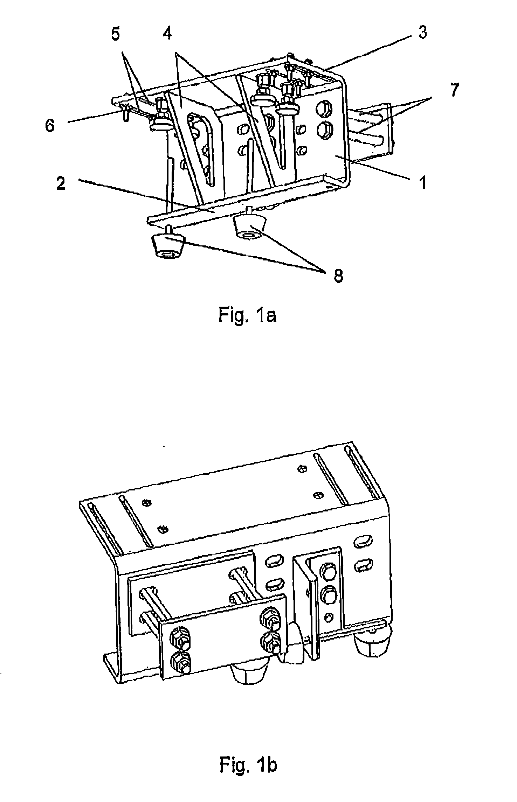

As shown in figures 1a and 1b, the support (1) is in a "U" shape, with one side shorter (2) than the opposite side. Some brackets (4) reinforce the larger side (3), where, through some slots (5) and some holes (6), the table is fastened (not represented in these figures). A series of long bolts (7) pass through the support base (1) to anchor to some external element such as a beam. Other bolts ending up in rubber blocks act as support feet (8) when crossing through the shorter side (2) of the support. On the external part of the support (1), represented in figure 1b, there are the protruding long bolts (7) and an anchored reaction arm (9), which provides, in combination with another both ending in a rubber block, stability to the assembly.

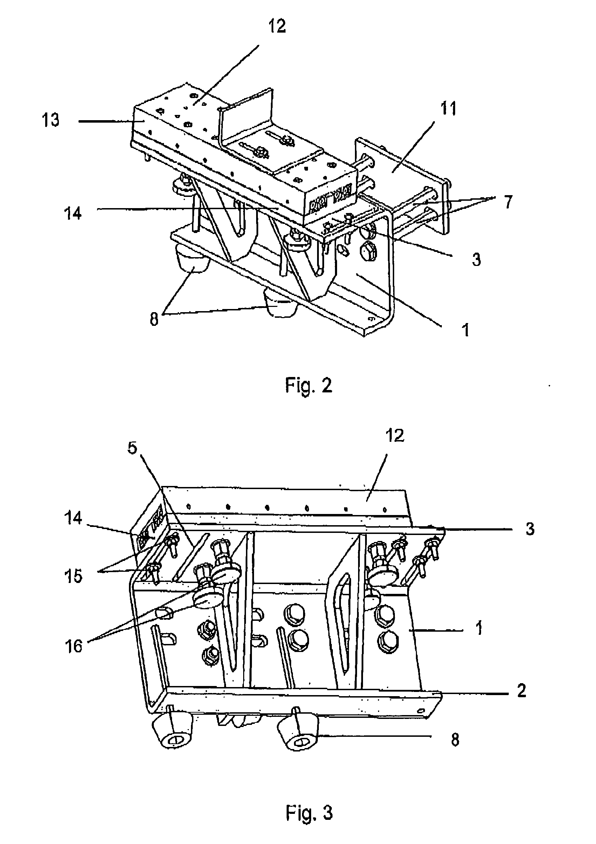

Figure 2 shows part of the tool mounted in a specific spot inside the wind turbine. The support rests on its support legs (8) and likewise secured to a beam (not shown in the figure) by the long bolts (7) and a support plate (11). The larger side (3) of the support is the fastening area for the extendable table (12), which comprises a rectangular part with a movable upper part (13) and a fixed lower part (14) anchored to the support (1).

The table (12) is adjusted and balanced with small bolts (15) and large bolts (16) located on the larger side (3) located inside the support (1). These bolts collaborate with the slots (5) and holes (6) mentioned above. Thus, the small bolts (15) in combination with the slots (5) are used to regulate the position of the table (12) crosswise, while the large bolts (16) in combination with their corresponding holes (6) regulate the flatness of the table (12). The foregoing as shown in figure 3.

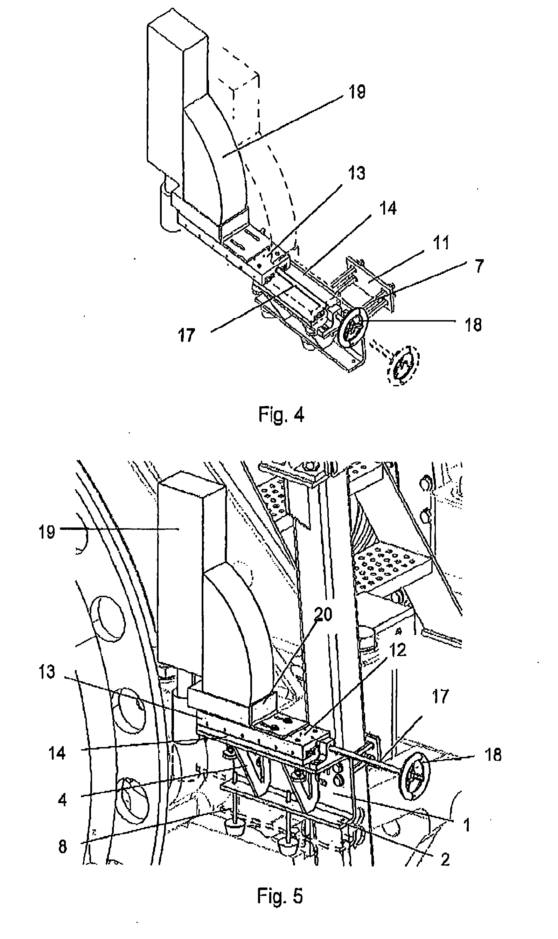

The movement of the table (12) on its longitudinal plane is achieved when sliding the upper movable part (13) on the fixed lower part (14). This movement is carried out by a pusher (17) driven by any appropriate means, though the present practical embodiment makes use of a lead screw (18) which is operated on manual effort. In figure 4, the table has a motion trajectory length of 200mm, achieving to provide the machining tool, object of the invention, with an even and controlled longitudinal movement.

The coupling of the machining element to the sliding table (12) thus groups all the components constituting the machining tool as shown in figure 5. For the present practical embodiment, the machining element is a drill (19) that is secured to the table (12) with magnetic elements. The drill (19) has a vertical movement for carrying out its intended working purpose, which, together with the transversal movement of the table (12), permits the tool to adapt and meet any type of required machining process. The essential elements of the machining tool are the support (1), the table (12) and the machining element; the tool's reduced size and weight allow for operator handling during wind turbine maintenance tasks at the farm itself. The joint between the drill (19) and the table (12) is complete with a support (20) in the shape of an "L" which keeps the drill from regressing (19).

## Claims

1. Machining tool to be handled manually by an operator during maintenance tasks performed in the field, **characterized by** being furnished with:
- a support (1) with fastening elements specific for coupling and leveling in areas requiring machining,
- a table (12) whose auxiliary pushing means move the upper part (13) with respect of the lower part (12) fixed to the support (1), procuring it a finite transversal movement
- and machining element fixed to the upper part (13) of the table (12)

2. Machining tool according to the first claim, characterized because the machining element is a drill (19) secured to the table (12) by magnetic fastening means.

3. Machining tool according to the first claim, characterized because the drive means on the table (12) is a lead screw (18) operated by manual effort which moves a pusher (17) in contact with the upper movable part (13).

4. Machining tool according to the first claim, characterized because the support (1) has the shape of a "U" with one side shorter (2) and some brackets (4) reinforce the larger side (3) where, through some slots (5) and some holes (6), the table (12) is secured.

5. Machining tool according to the fourth claim, characterized because different support feet (8) cross the shorter side (2) of the support (1) or anchor to a reaction arm (9) to complete the securing of the cited support (1).

6. Machining tool according to the first claim, characterized because the table (12) is regulated horizontally and transversely by adjusting some small bolts (15) and other larger bolts (16) located on the larger side (3) inside the support (1), and these bolts work with the slots (5) and holes (6) in the support (1).

7. Machining tool according to the first claim, characterized because the joint between the drill (19) and the table (12) is complete with a support (20) in the shape of an "L"
